# EUROPEAN PATENT APPLICATION

(11) **EP 4 756 972 A1**
(43) Date of publication of application: **10.06.2026**
(21) Application number: 24913645.8
(22) Date of filing: 27.12.2024
(51) Int. Cl.: H01M 10/0585, H01M 10/0562, H01M 10/052, H01M 4/134, H01M 4/02

(54) **ALL-SOLID-STATE BATTERY**

(30) Priority: 27.12.2023 JP 2023221548
(71) Applicant: LG Energy Solution, Ltd., Seoul 07335 (KR)
(72) Inventor: NARIMATSU, Eiichiro, Yokohama-shi, Kanagawa 220-0011 (JP); MATSUBARA, Keiko, Yokohama-shi, Kanagawa 220-0011 (JP); NITTA, Yoshiaki, Yokohama-shi, Kanagawa 220-0011 (JP); SONG, Su-Bin, Yokohama-shi, Kanagawa 220-0011 (JP)
(74) Representative: Goddar, Heinz J.
(86) International application number: PCT/KR2024/021226
(87) International publication number: WO 2025/143840

(57) **Abstract**

The present disclosure is directed to providing an anode-free all-solid-state battery having improved discharge capacity and cycle characteristics. The present disclosure is also directed to providing an anode-free all-solid-state battery which can be driven under a low confining pressure. The present disclosure provides an all-solid-state battery which includes a positive electrode including a positive electrode active material, a negative electrode current collector, and a solid electrolyte layer disposed between the positive electrode and the negative electrode current collector, the all-solid-state battery including no negative electrode active material, wherein lithium ions are supplied from the positive electrode active material layer through charging, so that a lithium metal layer as a negative electrode active material is formed on the negative electrode current collector, and the solid electrolyte layer includes a sulfide-based solid electrolyte containing a Group 2 element and having an argyrodite-type crystal structure.

## Description

### TECHNICAL FIELD

The present disclosure relates to an all-solid-state battery having an anode (negative electrode)-free structure.

This application is based on and claims priority from Japanese Patent Application No. 2023-221548 filed on December 27, 2023, the disclosure of which is incorporated herein in its entirety by reference.

### BACKGROUND ART

Development of all-solid-state batteries using a solid electrolyte substituting for a liquid electrolyte of lithium-ion batteries has been conducted in order to provide batteries with high safety, long service life and high energy density. Among many types of solid electrolytes, a sulfide-based solid electrolyte, such as Li₁₀GeP₂S₁₂, has high ion conductivity close to the ion conductivity of a liquid electrolyte and is soft, and thus is advantageous in that it is easy to obtain close adhesive property to an active material. Therefore, commercialization of all-solid-state batteries using a sulfide-based solid electrolyte has been expected.

Meanwhile, since lithium metal can increase energy density per weight (Wh/kg) by virtue of its low weight per unit volume and high theoretical capacity, it has been given many attentions as a negative electrode material of an all-solid-state battery. However, a sulfide-based solid electrolyte, such as Li₁₀GeP₂S₁₂, has low stability to lithium metal, and thus is problematic in that it has a difficulty in using together with a lithium metal negative electrode.

In addition, when using lithium metal as a negative electrode of a battery, a battery is manufactured generally by attaching lithium foil to a planar current collector, but lithium, an alkali metal, has high reactivity and thus reacts explosively with water and also reacts with oxygen in the air, resulting in a disadvantage of a difficulty in manufacture and use under general environment. Particularly, when lithium metal is exposed to the atmosphere, oxidized films, such as LiOH, Li₂O and Li₂CO₃, are formed as a result of oxidation. When an oxidized film exists on the surface, the oxidized film functions as an insulation film to cause a decrease in electrical conductivity and to inhibit smooth migration of lithium ions, resulting in a problem of an increase in electrical resistance.

To solve the above-mentioned problem, Patent documents 1 to 3 disclose an anode-less all-solid-state battery obtained by a method including depositing a trace amount of seed metal, such as Ag or Zn, capable of forming an alloy with lithium on a negative electrode current collector. However, such an anode-less all-solid-state state battery requires an additional step of applying and sputtering the metal and has a problem of high costs. In addition, the anode-less all-solid-state battery requires application of a high confining pressure during the operation of a battery in order to prevent growth of lithium dendrite.

To solve the above-mentioned problem, the inventors of the present disclosure have conducted intensive studies, and designed an anode-free all-solid-state battery in which a lithium metal layer can be formed on a negative electrode current collector by lithium ions transported from a positive electrode active material through charging, after the assemblage of a battery, in order to fundamentally interrupt contact between lithium metal and the atmosphere during the assemblage of a battery. In addition, developed was an anode-free all-solid-state battery which has excellent discharge capacity and cycle characteristics and can be operated under a low confining pressure by using a polyvalent cation-containing sulfide-based solid electrolyte as a solid electrolyte used in an anode-free all-solid-state battery.

### DISCLOSURE

### Technical Problem

The present disclosure is directed to providing an anode-free all-solid-state battery having improved discharge capacity and cycle characteristics.

The present disclosure is also directed to providing an anode-free all-solid-state battery which can be driven under a low confining pressure.

### Technical Solution

In one aspect of the present disclosure,
there is provided an all-solid-state battery which includes a positive electrode including a positive electrode active material, a negative electrode current collector, and a solid electrolyte layer disposed between the positive electrode and the negative electrode current collector,
the all-solid-state battery including no negative electrode active material,
wherein lithium ions are supplied from the positive electrode active material layer through charging, so that a lithium metal layer as a negative electrode active material is formed on the negative electrode current collector, and
the solid electrolyte layer includes a sulfide-based solid electrolyte containing a Group 2 element and having an argyrodite-type crystal structure.

In an exemplary embodiment, the negative electrode current collector and the solid electrolyte layer may be in direct contact with each other.

In an exemplary embodiment,
the sulfide-based solid electrolyte is represented by the chemical formula of Li_{7-x-2y}M_{y}PS₆₋ₓHaₓ and
in the chemical formula,
M represents at least one element selected from Group 2 elements,
Ha is at least one element selected from halogen elements, and
x and y satisfy 0 < x < 2.5 and 0 < y < 0.45.

In an exemplary embodiment, M may be Ca.

In an exemplary embodiment, the all-solid-state battery may contain no reaction product of the negative electrode current collector with the sulfide-based solid electrolyte.

In an exemplary embodiment, the all-solid-state battery may be pressurized under a pressure of 0.3 MPa or less in a direction along which the positive electrode, the negative electrode current collector and the solid electrolyte layer are stacked.

In an exemplary embodiment, the positive electrode active material layer may include the sulfide-based solid electrolyte.

In an exemplary embodiment, the sulfide-based solid electrolyte contained in the solid electrolyte layer may have an average particle diameter larger than the average particle diameter of the sulfide-based solid electrolyte contained in the positive electrode active material layer.

In an exemplary embodiment, the Group 2 element may exist at a 48h site of the argyrodite-type crystal structure.

### Advantageous Effects

The present disclosure can provide an anode-free all-solid-state battery having improved discharge capacity and cycle characteristics.

In addition, the present disclosure can provide an anode-free all-solid-state battery which can be driven at a low confining pressure.

### DESCRIPTION OF DRAWINGS

FIG. 1 is a schematic view illustrating all-solid-state batteries according to Examples 1 to 3.
FIG. 2 is a schematic view illustrating an all-solid-state battery according to Comparative Example 1.
FIG. 3 is a schematic view illustrating an all-solid-state battery according to Comparative Example 2.
FIG. 4 is a graph illustrating an X-ray diffractometry (XRD) pattern of a solid electrolyte according to each of Preparation Examples 1 and 2 and Comparative Preparation Examples 1 and 2.
FIG. 5 is a graph illustrating a discharge capacity retention of an all-solid-state battery according to each of Examples 1 to 4 and Comparative Examples 1 and 2.
FIG. 6 is a graph illustrating a discharge capacity retention of an all-solid-state battery according to each of Examples 1 to 4 and Comparative Examples 1 and 2.
FIG. 7 is a scanning electron microscopic (SEM) image illustrating calcium distribution in an all-solid-state battery according to Example 1.
FIG. 8 is an SEM image (left) of the negative electrode current collector side after the initial charge and a graph (right) illustrating calcium line scanning results, for an all-solid-state battery according to Example 1.

### BEST MODE

Hereinafter, the present disclosure will be described in more detail.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In the drawings, in order to clearly describe the present disclosure, parts irrelevant to the description are omitted, and similar reference numerals are assigned to parts similar to each other throughout the specification. In addition, the size and relative size of a component shown in the drawings are not related to the actual scale, and may be reduced or exaggerated for clarity of the description.

In the present specification, 'Dₙ' means a particle size distribution and refers to a particle diameter at an n% point of cumulative distribution of number of particles depending on particle diameter. That is, D₅₀ is a particle diameter (median particle diameter, average particle diameter) at 50% of cumulative distribution of number of particles depending on particle diameter, D₉₀ is a particle diameter at 90% of cumulative distribution of number of particles depending on particle diameter, and D₁₀ is a particle diameter at 10% of cumulative distribution of number of particles depending on particle diameter. Meanwhile, the particle size distribution may be measured by using a laser diffraction method. Specifically, after dispersing powder to be measured in a dispersion medium, the powder is introduced to a commercially available laser diffraction particle size measuring apparatus (e.g., Microtrac S3500), and a particle size distribution is calculated by measuring a difference in a diffraction pattern depending on particle size when the particles pass through the laser beams.

### [All-solid-state battery]

An all-solid-state battery according to an embodiment of the present disclosure includes a positive electrode including a positive electrode active material, a negative electrode current collector, and a solid electrolyte layer disposed between the positive electrode and the negative electrode current collector. The all-solid-state battery according to an embodiment of the present disclosure includes no negative electrode active material, and lithium ions are supplied from the positive electrode active material layer through charging, so that a lithium metal layer as a negative electrode active material is formed on the negative electrode current collector. In the all-solid-state battery according to an embodiment of the present disclosure, the solid electrolyte layer includes a sulfide-based solid electrolyte containing a Group 2 element and having an argyrodite-type crystal structure. The anode-free all-solid-state battery according to an embodiment of the present disclosure can improve discharge capacity and cycle characteristics by virtue of the above-mentioned constitution. In addition, the anode-free all-solid-state battery according to an embodiment of the present disclosure can be driven at a low confining pressure by virtue of the above-mentioned constitution.

Meanwhile, as used herein, 'all-solid-state battery' refers to a state (also referred to as 'all-solid-state battery precursor') before the initial lithium metal deposition (initial charge) is carried out on the negative electrode current collector.

The all-solid-state battery may also be an all-solid-state lithium secondary battery.

A confining pressure is applied to the all-solid-state battery during charge/discharge so that growth of lithium dendrite may be prevented. The confining pressure may be applied in a direction along which a positive electrode, a negative electrode current collector and a solid electrolyte layer disposed between the positive electrode and the negative electrode current collector are stacked, i.e. a direction perpendicular to the surface direction of the negative electrode current collector. For example, the confining pressure may be accomplished by fixing using jigs from both sides of the positive electrode side and negative electrode current collector side of the all-solid-state battery.

In general, a high confining pressure is applied to an all-solid-state battery to prevent growth of lithium dendrite. However, the all-solid-state battery using a sulfide-solid electrolyte containing a divalent cation according to an embodiment of the present disclosure may little require a confining pressure.

The all-solid-state battery may be pressurized, during charge/discharge, under a pressure of 0.3 MPa or less, preferably 0.1 MPa or less, more preferably 0.05 MPa or less, and even more preferably 0.02 MPa or less. As such, the anode-free all-solid-state battery according to an embodiment of the present disclosure can be driven at a low confining pressure.

In the case of a negative electrode of a lithium secondary battery, it is general that the negative electrode is formed on a negative electrode current collector. However, according to an embodiment of the present disclosure, an anode-free battery structure is assembled by using only the negative electrode current collector without any metal particles or coating layer on the surface, and then lithium ions released from the positive electrode active material through charging form a lithium metal layer as a negative electrode active material on the negative electrode current collector. As a result, a negative electrode having a configuration of negative electrode current collector/negative electrode active material layer is formed, thereby forming a configuration of conventional lithium secondary battery.

In other words, the anode-free battery according to the present disclosure may have a concept covering both an anode-free battery in which a negative electrode is not formed on the negative electrode current collector when initially assembled, and a battery that may have a negative electrode in which the negative electrode is formed on the negative electrode current collector according to use.

In addition, in the negative electrode according to an embodiment of the present disclosure, the shape of lithium metal formed as a negative electrode active material on the negative electrode current collector covers both a lithium metal shape formed into a layer, and a structure (e.g., structure of lithium metal aggregated into particle shapes) in which lithium metal is not formed into a layer.

Hereinafter, the present disclosure will be explained on the basis of a lithium metal layer shape in which lithium metal is formed into a layer, but it is apparent to those skilled in the art that the following description does not exclude a structure in which lithium metal is not formed into a layer.

### <Solid electrolyte layer>

A solid electrolyte layer includes a solid electrolyte. The solid electrolyte layer may have an insulating function and may function as an ion conductive channel.

The solid electrolyte layer may have a thickness of about 50 µm or less, preferably about 15-50 µm. Within the above-defined range, the solid electrolyte layer may have a suitable thickness considering ion conductivity, physical strength, energy density of an applicable battery, or the like. For example, in terms of ion conductivity or energy density, the thickness may be 10 µm or more, 20 µm or more, or 30 µm or more. Meanwhile, in terms of physical strength, the thickness may be 50 µm or less, 45 µm or less, or 40 µm or less. In addition, while the solid electrolyte layer has the above-defined range of thickness, it may have a tensile strength of about 100-2,000 kgf/cm². Further, the solid electrolyte layer may have a porosity of 15 vol% or less, or about 10 vol% or less. Thus, even though the solid electrolyte layer according to an embodiment of the present disclosure is a thin film, it may have high mechanical strength.

### (Solid electrolyte)

The solid electrolyte may include at least one of a sulfide-based solid electrolyte, an oxide-based solid electrolyte and a polymeric solid electrolyte. Preferably, the solid electrolyte contained in the all-solid-state battery according to an embodiment of the present disclosure is a sulfide-based solid electrolyte. The solid electrolyte may be contained in a positive electrode active material layer or contained in a solid electrolyte layer as a separator.

The solid electrolyte may have an average particle diameter controlled depending on use. It is possible to improve ion conductivity by controlling the average particle diameter of the solid electrolyte.

The average particle diameter and particle diameter distribution of the solid electrolyte may be controlled, for example, by modifying conditions, such as a rotation number or time, of a ball milling device. Therefore, it is possible to prepare solid electrolyte crude powder having a relatively large average particle diameter, solid electrolyte micropowder having a relatively small average particle diameter, and solid electrolyte ultracrude powder having a larger particle diameter distribution as compared to solid electrolyte crude powder. For example, the solid electrolyte crude powder and solid electrolyte ultracrude powder may be prepared separately by controlling the pulverizing time of a ball milling device.

The solid electrolyte crude powder may have an average particle diameter larger than the average particle diameter of the solid electrolyte micropowder. The solid electrolyte crude powder may have an average particle diameter of 5-50 µm, preferably 8-30 µm, more preferably 10-20 µm. The solid electrolyte micropowder may have an average particle diameter of 0.1-10 µm, preferably 0.5-5 µm, and more preferably 1-3 µm.

The solid electrolyte ultracrude powder may have the same average particle diameter as the average particle diameter of the solid electrolyte crude powder. In other words, the solid electrolyte ultracrude powder has an average particle diameter of 5-50 µm, preferably 8-30 µm, and more preferably 10-20 µm. The solid electrolyte ultracrude powder has a D₁₀ smaller than D₁₀ of the solid electrolyte crude powder, and the solid electrolyte ultracrude powder has a D₉₀ larger than D₉₀ of the solid electrolyte crude powder. The solid electrolyte ultracrude powder has a D₁₀ of 1-6 µm, preferably 2-5 µm. The solid electrolyte crude powder has a D₁₀ of 3-8 µm, preferably 4-7 µm. The solid electrolyte ultracrude powder has a D₉₀ of 100-500 µm, preferably 200-400 µm. The solid electrolyte crude powder has a D₉₀ of 30-100 µm, preferably 40-80 µm.

The sulfide-based solid electrolyte contained in the solid electrolyte layer may have an average particle diameter larger than the average particle diameter of the sulfide-based solid electrolyte contained in the positive electrode active material layer. Since the solid electrolyte crude powder and solid electrolyte ultracrude powder have a large average particle diameter and a small grain boundary per unit volume, they can show high ion conductivity when being used in a solid electrolyte layer. The solid electrolyte micropowder can infiltrate into gaps among the positive electrode active material particles when being used in a positive electrode active material layer, and thus can provide a lithium-ion conduction path to the positive electrode active material. Therefore, it is possible to improve discharge capacity and cycle characteristics of an all-solid-state battery by making the average particle diameter of the sulfide-based solid electrolyte contained in the solid electrolyte layer larger than the average particle diameter of the sulfide-based solid electrolyte contained in the positive electrode active material layer.

A particle diameter distribution of a solid electrolyte may affect discharge capacity and cycle characteristics of an all-solid-state battery. As the particle diameter distribution of the solid electrolyte becomes narrower (for example, as (D₉₀-D₁₀)/D₅₀ becomes smaller), lithium conduction becomes uniform during charge/discharge, resulting in high discharge capacity. As the particle diameter of the solid electrolyte becomes wider, lithium conduction becomes non-uniform during charge/discharge, resulting in a drop in discharge capacity. (D₉₀-D₁₀)/D₅₀ is 1-30, preferably 1-10, and more preferably 1-5. It is possible to further improve discharge capacity and cycle characteristics of an all-solid-state battery by controlling the particle diameter distribution to the above-defined range, in addition to the average particle diameter of the solid electrolyte.

The sulfide-based solid electrolyte is not particularly limited, as long as it contains sulfur (S), and any known sulfide-based solid electrolyte may be used.

The sulfide-based solid electrolyte may have a crystal structure. The sulfide-based solid electrolyte having a crystal structure accelerates lithium-ion conduction to provide high lithium-ion conductivity.

The sulfide-based solid electrolyte may have an argyrodite type, NASICON type, perovskite type, garnet type or LGPS type crystal structure. Preferably, the sulfide-based solid electrolyte may have an argyrodite type crystal structure. The sulfide-based solid electrolyte having an argyrodite type crystal structure has high stability to lithium metal, thereby allowing use of lithium metal having high energy density per weight as a negative electrode material.

The sulfide-based solid electrolyte may be amorphous, vitreous or glass-ceramic.

The sulfide-based solid electrolyte may have ion conductivity of metals that belong to Group 1 or Group 2 in the Periodic Table, and may include Li-P-S type glass or Li-P-S type glass-ceramic. Non-limiting examples of the sulfide-based solid electrolyte may include Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like, and the sulfide-based solid electrolyte may include one or more of them. However, the scope of the present disclosure is not particularly limited thereto.

The sulfide-based solid electrolyte may include a crystalline phase and amorphous phase. The sulfide-based solid electrolyte may include a crystalline phase containing an argyrodite-type crystal structure (also referred to as 'argyrodite phase' hereinafter) and the other phases (also referred to as 'impurity phases' or 'unknown phases' hereinafter). Preferably, the argyrodite-type crystal structure is a cubic system. The other phases may be crystalline phases or amorphous phases. The other phases may include a Li₂S phase, P₂S₅ phase, LiCl phase, LiBr phase, Li₃PS₄ phase, MgS phase, CaS phase, SrS phase, BaS phase, CaBr₂ phase, or the like, regardless of crystalline phases or amorphous phases. Preferably, the sulfide-based solid electrolyte does not include or substantially does not include any impurity phase other than the argyrodite phase. In other words, the sulfide-based solid electrolyte preferably includes the argyrodite phase alone. When the sulfide-based solid electrolyte does not include or substantially does not include any impurity phase, lithium-ion conduction is not easily inhibited, and thus the sulfide-based solid electrolyte may have high lithium-ion conductivity.

The ratio of the crystalline phase contained in the sulfide-based solid electrolyte may be evaluated quantitatively or semi-quantitatively from an X-ray diffractometry (XRD) pattern. As an evaluation method, the ratio of the crystalline phase may be evaluated by comparing the peak intensities (heights or areas) of the XRD pattern.

The sulfide-based solid electrolyte is represented by the chemical formula of Li_{7-x-2y}M_{y}PS₆₋ₓHaₓ. In the chemical formula, M may represent at least one element selected from Group 2 elements, Ha may be at least one element selected from halogen elements, and x and y may satisfy 0 < x < 2.5 and 0 < y < 0.45. The sulfide-based solid electrolyte may have a lattice volume of 950-980 Å³. Ha may include Br. Such a sulfide-based solid electrolyte may have high lithium-ion conductivity. It is possible to improve discharge capacity and cycle characteristics of an all-solid-state battery by using a sulfide-based solid electrolyte having high lithium-ion conductivity in an anode-free all-solid-state battery. In addition, since growth of lithium dendrite on a negative electrode current collector is prevented by the sulfide-based solid electrolyte having high lithium-ion conductivity, the anode-free all-solid-state battery according to an embodiment of the present disclosure can be driven under a low confining pressure.

In the sulfide-based solid electrolyte, lithium in Li₇₋ₓPS₆₋ₓHaₓ may be partially substituted with a Group 2 element (M) capable of being converted into a divalent cation. The Group 2 element (M) substituting for lithium may be at least one selected from the group consisting of magnesium (Mg), calcium (Ca), strontium (Sr) and barium (Ba). Lithium (Li) has an ion radius (hexa-coordinated) of 90 pm, and magnesium (Mg), calcium (Ca), strontium (Sr) and barium (Ba) have an ion radius (hexa-coordinated) of 86 pm, 114 pm, 132 pm and 149 pm, respectively. Based on the valence number of element, two lithium elements may be substituted with one Group 2 element (M). A lithium site vacancy is generated through the substitution with a Group 2 element (M) to provide improved lithium-ion conductivity. In addition, the sulfide-based solid electrolyte undergoes a change in lattice constants and lattice volume through the substitution with a Group 2 element (M), and thus may have a crystal structure suitable for lithium-ion conduction.

In addition, the sulfur-based solid electrolyte according to an embodiment of the present disclosure may be formed through the penetration of a Group 2 element (M) capable of being converted into a divalent cation into the crystal lattice of Li₇₋ₓPS₆₋ₓHaₓ. The Group 2 element (M) penetrating into the crystal structure may be at least one selected from the group consisting of magnesium (Mg), calcium (Ca), strontium (Sr) and barium (Ba). Magnesium (Mg), calcium (Ca), strontium (Sr) and barium (Ba) may be used alone or in combination. Preferably, the Group 2 element (M) is magnesium (Mg) or calcium (Ca). The sulfide-based solid electrolyte undergoes a change in lattice constants and lattice volume through the penetration of the Group 2 element (M) into the crystal lattice of Li₇₋ₓPS₆₋ₓHaₓ, and thus the sulfide-based solid electrolyte may have a crystal structure suitable for lithium-ion conduction. The sulfide-based solid electrolyte including calcium (Ca) as a Group 2 element (M) has high lithium-ion conductivity. When using such a sulfide-based solid electrolyte in an anode-free all-solid-state battery, it is possible to improve discharge capacity and cycle characteristics of the all-solid-state battery. In addition, when using such a sulfide-based solid electrolyte, growth of lithium dendrite on a negative electrode current collector is prevented, and thus the anode-free all-solid-state battery according to an embodiment of the present disclosure can be driven under a low confining pressure.

The Group 2 element (M) may be positioned at a vacancy site of the sulfide-based solid electrolyte having an argyrodite-type crystal structure. Since the Group 2 element (M) is positioned in a vacancy site of the argyrodite-type crystal structure, at least a part of the Group 2 element (M) can migrate away from the vacancy site during charge/discharge of an all-solid-state battery. A part of the Group 2 element (M) migrating away from the vacancy site can be deposited on the interface between the negative electrode current collector and the solid electrolyte layer, and/or on the interface between the positive electrode active material layer and the solid electrolyte layer. In addition, a part of the Group 2 element (M) migrating away from the vacancy site may return to the original vacancy site or another vacancy site. In the all-solid-state battery according to an embodiment of the present disclosure, doping amount (y) of the Group 2 element (M) contained in the sulfide-based solid electrolyte is small. Therefore, even if the Group 2 element (M) migrates away from the vacancy site, the argyrodite-type crystal structure of the sulfide-based solid electrolyte can be retained. The Group 2 element (M) can migrate as a carrier of the all-solid-state battery together with lithium during charge/discharge of the all-solid-state battery. The position of the Group 2 element (M) may be determined by any technology known to those skilled in the art, such as neutron powder diffractometry.

Preferably, the Group 2 element (M) is magnesium (Mg) and/or calcium (Ca), more preferably calcium (Ca). When the Group 2 element (M) is magnesium (Mg) and/or calcium (Ca), the sulfide-based solid electrolyte may have a high degree of crystallization, and thus may have high ion conductivity. It is thought that this is because the ion radius (90 pm) of lithium (Li) is close to the ion radii (86 pm and 114 pm) of magnesium (Mg) and calcium (Ca), and the argyrodite type crystal structure may be retained with ease even after the substitution with a Group 2 element (M).

The doping amount (y) of a Group 2 element (M) in the chemical formula of Li_{7-x-2y}M_{y}PS₆₋ₓHaₓ satisfies 0 < y < 0.45, preferably 0 < y < 0.1, more preferably 0.005 ≤ y ≤ 0.04, and even more preferably 0.01 ≤ y ≤ 0.03. When y satisfies the above-defined range, the sulfide-based solid electrolyte may have high ion conductivity. When y is 0, it is not possible to obtain a change in crystal structure derived from the substitution with a Group 2 element (M), resulting in low ion conductivity. When y is 0.45 or more, the sulfide-based solid electrolyte cannot retain the argyrodite type crystal structure, resulting in degradation of ion conductivity. In addition, impurity phases inhibiting lithium-ion conduction are increased in the sulfide-based solid electrolyte, resulting in degradation of ion conductivity.

The halogen (Ha) in the chemical formula of Li_{7-x-2y}M_{y}PS₆₋ₓHaₓ is at least one element selected from halogen elements. Preferably, the halogen (Ha) includes chlorine (Cl) and bromine (Br). Since sulfur (S) as a divalent anion shows stronger force of drawing lithium ions as compared to a monovalent halogen ion, and thus can inhibit lithium-ion movement significantly. When the halogen includes bromine (Br), the share of sulfur (S) at a specific site in the argyrodite-type crystal structure is reduced and the share of halogen at the corresponding site is increased, and thus lithium-ion mobility may become active around the bromine (Br) site. As a result, lithium-ion conductivity can be improved. In addition, bromine (Br) may be bound with Li in the sulfide-based solid electrolyte to form lithium bromide (LiBr), which is a water-absorbing substance. Lithium bromide (LiBr) absorbs water that may cause degradation of lithium-ion conductivity, thereby improving the lithium-ion conductivity of the sulfide-based solid electrolyte.

The ratio (x) of halogen (Ha) in the chemical formula of Li_{7-x-2y}M_{y}PS₆₋ₓHaₓ satisfies 0 < x < 2.5, preferably 1.0 < x < 2.0, and more preferably 1.3 < x < 1.8. When x satisfies the above-defined range, the argyrodite type crystal structure is stabilized, and thus the sulfide-based solid electrolyte may have high ion conductivity.

The Group 2 element (M) contained in the sulfide-based solid electrolyte can migrate when the all-solid-state battery is driven. Preferably, the Group 2 element (M) contained in the sulfide-based solid electrolyte can migrate in the form of a divalent cation.

At least a part of the Group 2 element (M) may migrate toward the negative electrode during charge of the all-solid-state battery and may be deposited on the interface between the negative electrode current collector and the solid electrolyte layer. When a separate intermediate layer is present between the negative electrode current collector and the solid electrolyte layer, the Group 2 element (M) may be deposited on the interface between the negative electrode current collector and the intermediate layer. A part of the Group 2 element (M) may be deposited inside of the intermediate layer.

At least a part of the Group 2 element (M) may migrate toward the positive electrode during discharge of the all-solid-state battery and may be deposited on the interface between the positive electrode active material layer and the solid electrolyte layer. When a separate intermediate layer is present between the positive electrode active material layer and the solid electrolyte layer, the Group 2 element (M) may be deposited on the interface between the positive electrode current collector and the intermediate layer. A part of the Group 2 element (M) may also be deposited inside of the intermediate layer.

The Group 2 element (M) may be deposited on each of the interfaces in the form of at least one selected from the group consisting of a Group 2 element (M) alone, alloy with lithium and a compound containing the Group 2 element (M). When the Group 2 element (M) is deposited on each interface during charge/discharge, close adhesive property is improved at each interface, and thus the ion conduction path and/or electrical conduction path covering each of the interfaces is retained. In this manner, the all-solid-state battery according to an embodiment of the present disclosure has improved discharge capacity and cycle characteristics. In addition, the all-solid-state battery according to an embodiment of the present disclosure can accomplish charge/discharge without a high confining pressure of several MPa or higher required in the case of driving of conventional all-solid-state batteries.

The Group 2 element (M) is present preferably at a 48h site of the argyrodite-type crystal structure. A part of the Group 2 element (M) present at a 48h site of the argyrodite-type crystal structure can migrate toward the negative electrode during charge of the all-solid-state battery and can migrate toward the positive electrode during discharge of the all-solid-state battery, while not breaking the argyrodite-type crystal structure.

The alloy of a Group 2 element (M) with lithium may include MLiₓ (1 ≤ x ≤ 2). Preferably, the alloy of a Group 2 element (M) with lithium may include CaLiₓ (1 ≤ x ≤ 2). More preferably, the alloy of a Group 2 element (M) with lithium may include at least one selected from the group consisting of CaLi and CaLi₂. The alloy may also include CaLi₃ and Ca₃Li.

The compound of a Group 2 element (M) with lithium may include a compound of calcium with lithium. In addition, the compound may also include a compound of magnesium with lithium.

The ion conductivity of the sulfide-based solid electrolyte may be affected by the degree of crystallization thereof. The degree of crystallization may be evaluated from an XRD pattern. In the XRD pattern, when any phase (crystalline phase or amorphous phase, such as Li₂S phase, P₂S₅ phase, LiCl phase, LiBr phase, Li₃PS₄ phase, MgS phase, CaS phase, SrS phase, BaS phase, or the like) other than the argyrodite crystalline phase is not observed or is not substantially observed, the sulfide-based solid electrolyte may have high ion conductivity.

The lattice volume of the sulfide-based solid electrolyte may be changed by substitution of a lithium site with a Group 2 element (M). Although it is not bound to any specific theory, the Group 2 element (M) shows properties of a divalent cation and has strong interaction with another anion present in the sulfide-based solid electrolyte, resulting in a change, i.e. increase or decrease, in lattice volume. Such a change in lattice volume results in a crystal structure suitable for lithium-ion conduction, and thus the sulfide-based solid electrolyte may have high ion conductivity.

The sulfide-based solid electrolyte may have a lattice volume of 950-980 Å³, preferably 958-966 Å³, more preferably 960-964 Å³, and even more preferably 961-963 Å³. The lattice constants and lattice volume may be evaluated from an XRD pattern. The lattice volume of the sulfide-based solid electrolyte may be changed depending on firing temperature even under the same composition. When the lattice volume satisfies the above-defined range, lithium-ion conduction in the sulfide-based solid electrolyte is accelerated, and thus the sulfide-based solid electrolyte may have high ion conductivity.

Unless otherwise stated, the ion conductivity (also referred to as 'lithium-ion conductivity' hereinafter) of the sulfide-based solid electrolyte refers to the ion conductivity thereof at room temperature (25°C, 298K) under ambient pressure (1 atm). When the sulfide-based solid electrolyte is used in an all-solid-state battery, it is practically preferred that the ion conductivity is 4 mS/cm or more. The sulfide-based solid electrolyte according to an embodiment of the present disclosure has an ion conductivity of 2 mS/cm or more, preferably 4 mS/cm or more, more preferably 10.8 mS/cm or more, even more preferably 12 mS/cm or more, and most preferably 13 mS/cm or more.

The sulfide-based solid electrolyte according to an embodiment of the present disclosure may be obtained by a method including the steps of: mixing a lithium source, a Group 2 element source, a phosphorus source, a sulfur source and a halogen source to obtain a mixture; and firing the mixture at a temperature of 250-600°C. The step of firing the mixture may be carried out under inert atmosphere, such as argon gas, nitrogen gas, or the like.

Each of the lithium source, the Group 2 element source, the phosphorus source, the sulfur source and the halogen source may be a compound, such as sulfide, oxide, nitride, or the like. Lithium sulfide (Li₂S) may be used as a lithium source, diphosphorus pentasulfide (P₂S₅) may be used as a phosphorus source, and a lithium halide, such as lithium chloride (LiCl), lithium bromide (LiBr), or the like, may be used as a halogen source. For example, the Group 2 element source may be a sulfide. In a variant, sulfur may be supplied from a source of another element. In other words, at least one of the lithium source, Group 2 element source, phosphorous source and halogen source may also function as a sulfur source.

In the case of a sulfide-based solid electrolyte having an argyrodite-type crystal structure, the firing temperature is preferably 350-550°C, more preferably 400-500°C, and even more preferably 410-470°C. When the firing temperature satisfies the above-defined range, formation of the argyrodite-type crystal structure may be accelerated, and thus the sulfide-based solid electrolyte may have a high degree of crystallization. Therefore, it is possible to obtain a sulfide-based solid electrolyte having high ion conductivity.

The solid electrolyte layer may further include a binder for a solid electrolyte layer. The binder for a solid electrolyte layer may be introduced for binding of solid electrolytes among themselves, and binding between the solid electrolyte layer and a battery element (e.g. positive electrode, negative electrode, etc.) stacked on both surfaces thereof.

The binder for a solid electrolyte layer is not particularly limited and may be selected suitably from the components used as binders of a solid electrolyte in an all-solid-state lithium secondary battery. Particular examples of the binder for a solid electrolyte layer may include at least one selected from the group consisting of polyvinylidene fluoride (PVDF), polyvinyl alcohol (PVA), carboxymethyl cellulose (CMC), starch, hydroxypropyl cellulose, polyvinyl pyrrolidone, polytetrafluoroethylene, polyethylene, polypropylene, ethylene-propylene-diene monomer (EPDM), styrene-butadiene rubber (SBR), styrene-butadiene-styrene block copolymer (SBS), nitrile butadiene rubber (NBR), fluororubber, and acrylic binders.

The solid electrolyte layer may not include a binder for a solid electrolyte layer. When the solid electrolyte layer includes no binder for a solid electrolyte layer, the content of the solid electrolyte contained in the solid electrolyte layer may be increased, and thus the ion conductivity of the solid electrolyte layer may be improved.

### <Negative electrode>

The negative electrode includes no negative electrode active material, before the initial lithium metal deposition (initial charge) is carried out.

Lithium ions are supplied from the positive electrode active material contained in the positive electrode through charging, and a lithium metal layer as a negative electrode active material is formed on the negative electrode current collector. Specifically, when an all-solid-state battery having an anode-free battery structure is charged by applying a predetermined level or higher voltage thereto, lithium ions are released from the positive electrode active material in the positive electrode, and the released lithium ions pass through the solid electrolyte layer and migrate toward the negative electrode current collector to form a lithium metal layer including pure lithium alone on the negative electrode current collector, thereby forming a negative electrode. Such formation of a lithium metal layer through charging is advantageous in that a thin film layer can be formed and interfacial characteristics can be controlled with ease as compared to conventional negative electrodes formed by sputtering a lithium metal layer onto a negative electrode current collector or by laminating lithium foil with a negative electrode current collector.

Particularly, since no exposure of lithium metal to the atmosphere occurs during the assemblage of a battery by virtue of an anode-free battery structure, it is possible to fundamentally avoid such problems as formation of an oxidized film on the surface caused by high reactivity of lithium itself and degradation of life of a lithium secondary battery caused thereby.

The formed lithium metal layer forms a uniform and continuous or discontinuous layer on the negative electrode current collector. For example, when the negative electrode current collector has a foil-like shape, the lithium metal layer may have a continuous thin film shape. When the negative electrode current collector has a three-dimensional porous structure, the lithium metal layer may be formed discontinuously. That is, the discontinuous layer is in the form of discontinuous distribution, and means that zones having a lithium metal layer and zones having no lithium metal layer exist in specific zones, but the zones having no lithium metal layer are distributed in such a manner that they may isolate, disconnect or separate the zones having a lithium compound, like island shapes, and thus the zones having a lithium metal layer are distributed with no continuity.

Such a lithium metal layer formed through charging/discharging has a thickness of at least 50 nm to 100 µm, preferably 1 to 50 µm so that it may function as a negative electrode. If the thickness is less than the above-defined range, battery charge/discharge efficiency is reduced rapidly. On the contrary, if the thickness exceeds the above-defined range, life characteristics, etc. are stabilized but there is a problem in that battery energy density is degraded.

Particularly, since the lithium metal layer disclosed herein is prepared as an anode-free battery having no lithium metal upon the assemblage of the battery, little or no oxidized layer is formed on the lithium metal layer during the assemblage, as compared to a lithium secondary battery assembled by using lithium foil according to the related art. Therefore, it is possible to prevent degradation of battery life caused by the oxidized layer.

To form a lithium metal layer according to an embodiment of the present disclosure, charge is carried out once in a voltage range of 4.5-2.5 V at 0.01-0.2 C. If charge is carried out below the above-defined range, it is difficult to form a lithium metal layer. On the contrary, if the above-defined range is exceeded, battery damages occur to generate over-discharge, and then charge/discharge cannot be performed properly.

The negative electrode may include a negative electrode current collector. The negative electrode current collector is not particularly limited, as long as it does not cause any chemical change in a battery and has conductivity. Particular examples of the negative electrode current collector may include: iron; stainless steel; aluminum; nickel; titanium; baked carbon; aluminum or stainless steel surface-treated with carbon, nickel, titanium, silver, etc.; or the like.

Particularly, it is preferred that the negative electrode current collector according to an embodiment of the present disclosure does not react with a sulfide-based solid electrolyte. That is, the all-solid-state battery according to an embodiment of the present disclosure preferably includes no reaction product of the negative electrode current collector with the sulfide-based solid electrolyte. The fact that the all-solid-state battery includes no reaction product of the negative electrode current collector with the sulfide-based solid electrolyte may be determined by observing a cross-sectional surface of the all-solid-state battery with a scanning electron microscope (SEM) or transmission electron microscope (TEM). The fact that the all-solid-state battery includes no reaction product may also be determined through X-ray diffractometry (XRD). Before initial lithium metal deposition (initial charge) is carried out, the negative electrode current collector may be in direct contact with the sulfide-based solid electrolyte. In addition, after the battery is discharged, lithium metal as a negative electrode active material migrates toward the positive electrode, and thus little or no negative electrode active material exists on the negative electrode current collector. If a side reaction of the negative electrode current collector with the sulfide-based solid electrolyte occurs, byproducts, such as hydrogen sulfide, are produced, thereby adversely affecting the performance of the all-solid-state battery. To prevent such a side reaction, the negative electrode current collector preferably has high stability to the sulfide-based solid electrolyte. Since the negative electrode current collector does not react with the sulfide-based solid electrolyte, the anode-free all-solid-state battery according to an embodiment of the present disclosure can realize improved discharge capacity and cycle characteristics. In addition, since the negative electrode current collector does not react with the sulfide-based solid electrolyte to generate no side reaction products, the anode-free all-solid-state battery according to an embodiment of the present disclosure can be driven under a low confining pressure.

The negative electrode current collector may have a thickness of 3-500 µm.

The negative electrode current collector may have various shapes, such as a sheet, a foil, a net, a porous body, a foam and a nonwoven body, having fine surface irregularities formed on the surface thereof.

The negative electrode current collector may be in direct contact with the solid electrolyte layer. The negative electrode current collector may be in direct contact with the sulfide-based solid electrolyte contained in the solid electrolyte layer. When the negative electrode current collector is in direct contact with the solid electrolyte with no intermediate layer interposed therebetween, the thickness of the all-solid-state battery can be reduced and the energy density thereof can be improved. Since the amount of the active material loaded in the all-solid-state battery is increased and growth of lithium dendrite is prevented, the all-solid-state battery can realize improved discharge capacity and cycle characteristics. In addition, the all-solid-state battery can be driven under a low confining pressure.

The negative electrode current collector may not be in direct contact with the solid electrolyte layer. An intermediate layer may be formed between the negative electrode current collector and the solid electrolyte layer. When an intermediate layer is formed, lithium ions supplied from the positive electrode active material layer pass through the intermediate layer and a lithium metal layer is formed on the negative electrode current collector. That is, the lithium metal layer is formed between the negative electrode current collector and the intermediate layer during charge.

Herein, the intermediate layer may include any material, as long as it allows smooth transfer of lithium ions, and may include a material used for a lithium-ion conductive polymer and/or an inorganic solid electrolyte, and if necessary, may further include a lithium salt.

The intermediate layer may include a metal capable of forming an alloy with lithium. The metal capable of forming an alloy with lithium may include germanium, tin, zinc, indium, gallium, antimony, lead, gold, silver, aluminum, platinum, palladium, or the like.

The lithium-ion conductive polymer may include, for example, any one selected from the group consisting of polyethylene oxide (PEO), polyacrylonitrile (PAN), polymethyl methacrylate (PMMA), polyvinylidene fluoride (PVDF) and polyvinylidene fluoride-co-hexafluoropropylene (PVDF-co-HFP), or a mixture of two or more of them, but is not limited thereto. Any polymer may be used with no particular limitation, as long as it has lithium-ion conductivity.

When using a lithium-ion conductive polymer, in order to further increase lithium-ion conductivity, the intermediate layer may further include a material used for such purpose.

For example, the intermediate layer may further include a lithium salt, such as LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, (CF₃SO₂)₂NLi, (FSO₂)₂NLi, lithium chloroborate, lithium lower aliphatic carboxylate, lithium tetraphenylborate, lithium imide, or the like.

The inorganic solid electrolyte is a ceramics-based material and may include a crystalline or amorphous material, and particular examples thereof may include Thio-LISICON(Li_{3.25}Ge_{0.25}P_{0.75}S4), Li₂S-SiS₂, LiI-Li₂S-SiS₂, LiI-Li₂S-P₂S₃, LiI-Li₂S-P₂O₅, LiI-Li₃PO₄-P₂S₅, Li₂S-P₂S₅, Li₃PS₄, Li₇P₃S₁₁, Li₂O-B₂O₃, Li₂O-B₂O₃-P₂O₅, Li₂O-V₂O₅-SiO₂, Li₂O-B₂O₃, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO(_{4-3/2 w})N_{w} (w < 1), Li_{3.6}Si_{0.6}P_{0.4}O₄, or the like. Herein, when using an inorganic solid electrolyte, the intermediate layer may further include a lithium salt, if necessary.

The inorganic solid electrolyte may be applied in the form of a thick film through slurry coating by mixing it with a known material, such as a binder. In addition, if necessary, the inorganic solid electrolyte may be applied in the form of a thin film through a deposition process, such as sputtering. The slurry coating process used herein may be selected suitably based on the description of a coating method, a drying method and a solvent mentioned with relation to the lithium-ion conductive polymer.

The intermediate layer including the lithium-ion conductive polymer and/or inorganic solid electrolyte can ensure an effect of increasing a lithium-ion transfer rate and thus facilitating formation of a lithium metal layer, simultaneously with an effect of inhibiting or preventing formation of lithium dendrite occurring when using a lithium metal layer/negative electrode current collector as a negative electrode.

To ensure the above-mentioned effects, it is required to limit the intermediate layer in thickness.

A smaller thickness of the intermediate layer is favorable to battery output characteristics. However, when the intermediate layer is not formed to a predetermined thickness or more, it is not possible to inhibit side reactions between lithium formed subsequently on the negative electrode current collector and an electrolyte, and it is not also possible to interrupt dendrite growth effectively. According to an embodiment of the present disclosure, the intermediate layer may have a thickness of 10 nm to 50 µm, preferably. When the thickness of the intermediate layer is less than the above-defined range, it is not possible to effectively inhibit side reactions and exothermic reactions between lithium and the electrolyte, which increase under a condition, such as overcharge or high-temperature storage, and thus it is not possible to improve safety. On the other hand, when the thickness exceeds the above-defined range, the thickness of the all-solid-state battery is increased to cause a decrease in volumetric energy density of the all-solid-state battery.

### <Positive electrode>

A positive electrode may include a positive electrode active material layer and a positive electrode current collector.

The positive electrode current collector is not particularly limited, as long as it does not cause any chemical change in a battery and has high conductivity. Particular examples of the positive electrode current collector may include at least one selected from the group consisting of iron, stainless steel, copper, aluminum, nickel, titanium and baked carbon, specifically aluminum. The positive electrode current collector may include a carbonaceous conductive material and a binder and may further include a primer layer coated on the surface of the positive electrode current collector. In this manner, it is possible to significantly improve the binding force between the positive electrode active material layer and the current collector and electrical conductivity.

The positive electrode active material layer may be disposed on at least one surface of the positive electrode current collector. Specifically, the positive electrode active material layer may be disposed on one surface or both surfaces of the positive electrode current collector.

The positive electrode active material layer may include a positive electrode active material. In the anode-free battery structure according to an embodiment of the present disclosure, the lithium source for forming a lithium metal layer is a positive electrode active material, which contains lithium. That is, the lithium ion of the positive electrode active material is released upon charging to a specific voltage range, thereby forming a lithium metal layer on the negative electrode current collector.

The positive electrode active material is not particularly limited, as long as it can be used as a positive electrode active material for a lithium-ion secondary battery. The positive electrode active material may include, but is not limited to: layered compounds, such as lithium cobalt oxide (LiCoO₂) and lithium nickel oxide (LiNiO₂), or those compounds substituted with one or more transition metals; lithium manganese oxides, such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (M is Co, Mn, Al, Cu, Fe, Mg, B or Ga, and x is 0.01-0.3); lithium manganese composite oxides represented by the chemical formula of LiMn₁₋ₓMₓO₂ (M is Co, Ni, Fe, Cr, Zn or Ta, x is 0.01-0.1) or Li₂Mn₃AO₈ (A is Fe, Co, Ni, Cu or Zn); lithium manganese composite oxides having a spinel structure and represented by the formula of LiNiₓMn₂₋ₓO₄; LiMn₂O₄ in which Li is partially substituted with an alkaline earth metal ion; disulfide compounds; LiMnₓFe₁₋ₓPO₄ (0 ≤ x ≤ 0.9); Fe₂(MoO₄)₃; or the like.

The positive electrode active material may include Li₁₊ₓM_{y}O_{2+z}, wherein M is at least one element selected from the group consisting of Ni, Co, Mn, Fe, P, Al, Mg, Ca, Zr, Zn, Ti, Ru, Nb, W, B, Si, Na, K, Mo and V, 0 ≤ x ≤ 5, 0 < y ≤ 2, 0 ≤ z ≤ 2. Specifically, Li₁₊ₓM_{y}O_{2+z} may include at least one selected from the group consisting of LiCoO₂, LiNiO₂, LiMnO₂, Li[Ni_{0.5}C_{o0.3}Mn_{0.2}]O₂, Li[Ni_{0.6}Co_{0.2}Mn_{0.2}]O₂, Li[Ni_{0.7}Co_{0.1}Mn_{0.2}]O₂, Li[Ni_{0.8}Co_{0.1}Mn_{0.1}]O₂, Li[Ni_{0.9}Co_{0.05}Mn_{0.05}]O₂, LiMn₂O₄, and LiFePO₄, _{0.5}Li₂MnO₃0.5Li[Mn_{0.4}Ni_{0.3}Co_{0.3}]O₂. Preferably, Li₁₊ₓM_{y}O_{2+z} may include any one of Li[Ni_{0.6}Co_{0.2}Mn_{0.2}]O₂, Li[Ni_{0.7}Co_{0.1}Mn_{0.2}]O₂, Li[Ni_{0.8}Co_{0.1}Mn_{0.1}]O₂, and Li[Ni_{0.9}Co_{0.05}Mn_{0.05}]O₂. Since the positive electrode active material includes Li₁₊ₓM_{y}O_{2+z}, lithium can be supplied sufficiently to the negative electrode. Since Li₁₊ₓM_{y}O_{2+z} shows electrochemical activity after the initial cycle while not causing degradation of the overall performance of the battery, it is possible to solve a loss of battery capacity caused by the irreversible capacity of the negative electrode. Li₁₊ₓM_{y}O_{2+z} may be in the form of secondary particles formed by binding or granulation of primary particles. In a variant, Li₁₊ₓM_{y}O_{2+z} may be in the form of single particles.

The positive electrode active material may be contained in an amount of 50-95 wt%, specifically 60-90 wt%, in the positive electrode active material layer.

In addition, the positive electrode active material may have an average particle diameter of 1-30 µm, and according to an embodiment, 8-12 µm. When the average particle diameter of the positive electrode active material falls within the above-defined range, the battery shows excellent capacity characteristics.

The positive electrode active material layer may further include a positive electrode conductive material.

The positive electrode conductive material is not particularly limited, as long as it causes no chemical change in the corresponding battery and has conductivity. For example, the positive electrode conductive material may include any one selected from: graphite, such as natural graphite or artificial graphite; carbon black, such as acetylene black, ketjen black, channel black, furnace black, lamp black or thermal black; graphene; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives, or a mixture of two or more of them.

The positive electrode conductive material may be contained in an amount of 1-30 wt% in the positive electrode active material layer.

The positive electrode active material layer may include a positive electrode binder.

The positive electrode binder is not particularly limited, as long as it is a component that helps binding of the positive electrode active material, positive electrode conductive material, etc., and binding to the current collector. Specifically, the positive electrode binder may include at least one selected from the group consisting of polyvinylidene fluoride (PVDF), polyvinyl alcohol (PVA), carboxymethyl cellulose (CMC), starch, hydroxypropyl cellulose, polyvinyl pyrrolidone, polytetrafluoroethylene, polyethylene, polypropylene, ethylene-propylene-diene monomer (EPDM), styrene butadiene rubber (SBR), and fluororubber.

The positive electrode binder may be contained in an amount of 1-30 wt% in the positive electrode active material layer.

If necessary, the positive electrode active material layer may further include at least one additive, such as an oxidation stabilizing additive, a reduction stabilizing additive, a flame retardant, a heat stabilizer, an anti-fogging agent, or the like.

The positive electrode active material layer may further include a sulfide-based solid electrolyte. The sulfide-based solid electrolyte contained in the positive electrode active material layer may have the same composition as the sulfide-based solid electrolyte contained in the solid electrolyte layer, or may have a different composition.

The positive electrode active material layer may include the sulfide-based solid electrolyte at 5-60 wt%, specifically 10-40 wt%.

The average particle diameter of the positive electrode active material may be larger than the average particle diameter of the solid electrolyte contained in the positive electrode active material layer. In this case, the solid electrolyte can enter a gap among the positive electrode active material particles, and thus can provide a lithium-ion conduction path to the positive electrode active material.

The present disclosure provides a secondary battery having the above-described structure. There are also provided a battery module including the secondary battery as a unit cell, a battery pack including the battery module, and a device including the battery pack as a power source. Herein, particular examples of the device may include, but are not limited to: power tools driven by an electric motor; electric cars, including electric vehicles (EVs), hybrid electric vehicles (HEVs), plug-in hybrid electric vehicles (PHEVs), or the like; electric carts, including electric bikes (E-bikes) and electric scooters (E-scooters); electric golf carts; electric power storage systems; or the like.

Hereinafter, preferred embodiments will be described in order to facilitate understanding of the present disclosure. However, it is apparent to those skilled in the art that the following embodiments are merely examples of the present disclosure, and various changes and modifications may be made within the scope of the present disclosure, and such modifications and modifications also fall within the scope of claims.

### (Synthesis of solid electrolyte)

### Preparation Example 1

First, as sources, used were lithium sulfide (Li₂S, available from Mitsuwa Chemical), diphosphorus pentasulfide (P₂S₅, available from Aldrich), calcium sulfide (CaS, available from Japan Pure Chemical), lithium chloride (LiCl, available from Aldrich) and lithium bromide (LiBr, available from Aldrich). The sources were weighed and mixed with a mortar in a glove box under argon gas atmosphere to a composition of Li_{5.4-2y}M_{y}PS_{4.4}Cl_{1.0}Br_{0.6} (doping amount of a Group 2 element (M), y = 0.025), and thus mixed powder was obtained. The resultant mixed powder was introduced to a ZrO₂ pot together with ZrO₂ balls to provide a sealed pot. The sealed pot is installed in a planetary ball mill device, ball milling was carried out at 380 rpm for 20 hours, and then the pot was opened in the glove box to recover the powder. The resultant powder was placed and sealed in a carbon crucible, and then was fired at a temperature of 430°C for 8 hours, while allowing argon gas to flow. The fired powder was pulverized with a mortar for 10 minutes to obtain solid electrolyte crude powder containing a divalent cation.

### Preparation Example 2

Solid electrolyte micropowder containing a divalent cation was obtained by introducing the solid electrolyte crude powder containing a divalent cation, obtained from Preparation Example 1, into a ZrO₂ pot together with ZrO₂ balls and anisole solvent, and carrying out wet pulverization at 250 rpm for 1 hour.

### Preparation example 3

Solid electrolyte ultracrude powder containing a divalent cation was obtained in the same manner as Preparation Example 1, except that the fired powder was pulverized by using a mortar for 1 minute.

### Comparative Preparation Example 1

Solid electrolyte crude powder containing no divalent cation was obtained in the same manner as Preparation Example 1, except that calcium sulfide (CaS, available from Japan Pure Chemical) was not used. The solid electrolyte obtained from Comparative Preparation Example 1 had a composition of Li_{5.4}PS_{4.4}Cl_{1.0}Br_{0.6}.

### Comparative Preparation Example 2

Solid electrolyte micropowder containing no divalent cation was obtained by introducing the solid electrolyte crude powder containing no divalent cation, obtained from Comparative Preparation Example 1, into a ZrO₂ pot together with ZrO₂ balls and anisole solvent, and carrying out wet pulverization at 250 rpm for 1 hour.

### [Evaluation]

Each solid electrolyte obtained as described above was evaluated as follows.

### (XRD determination)

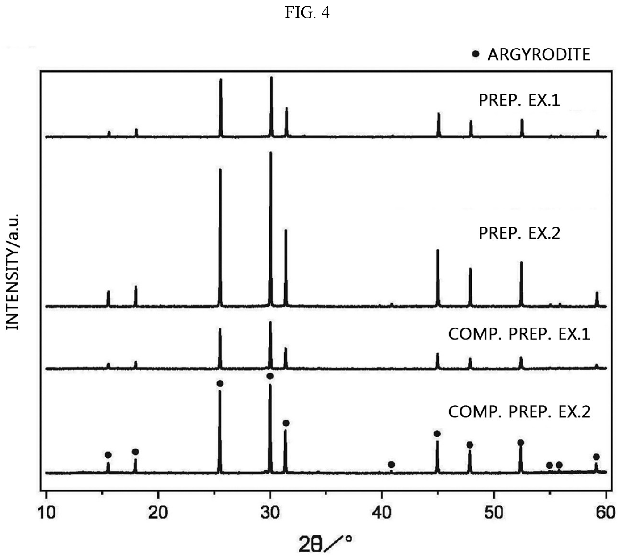

Each solid electrolyte taken in a predetermined amount was introduced to a sealed holder in a glove box under argon gas flow, and X-ray diffractometry (XRD) was carried out. Then, a lattice constant, lattice volume and half width were calculated from the resultant XRD (X-ray diffraction) pattern. The half width was calculated from the crystal peak of (311) surface of the argyrodite-type crystal structure observed at around 2θ = 30° in FIG. 4.

The determination system and condition are as follows.
- X-ray diffractometry system: Rigaku Smartlab
- Source: Cu-Kα ray (λ = 1.5418 Å)
- Voltage: 45 kV
- Current: 200 mA
- Scan range (20): 10-60°
- Step size: 0.01°

### (Determination of particle size distribution)

The solid electrolyte was introduced to heptane solvent, and Span 80 was used as a dispersion material to prepare a solid electrolyte dispersion. The dispersion was used to determine a particle size distribution by using a particle size analyzer, Mastersizer 3000. Then, data was interpreted with the refraction index of the solid electrolyte taken as 2.16.

### (Determination of ion conductivity)

Each solid electrolyte taken in a predetermined amount was disposed in a MACOR^{®} pipe, and then a pellet-molding jig (upper press pin and lower press pin) was assembled with the MACOR pipe, and press molding was carried out under approximately 370 MPa by using a monoaxial press. After that, a predetermined amount of gold powder was disposed on both surfaces of the pellets, and press molding was carried out under approximately 554 MPa by using a monoaxial press to obtain a MACOR pipe cell. The resultant MACOR pipe cell was mounted to a jig cell for electrochemical determination, and pressurization was carried out to 80 N·m by using a torque wrench to obtain an ion conductivity test cell. The ion conductivity test cell was connected to an impedance analyzer, and the resistance value of the solid electrolyte pellets was measured at room temperature (298K) under ambient pressure (1 atm) to calculate the ion conductivity (mS/cm) of the solid electrolyte.

### (Neutron powder diffractometry)

Each solid electrolyte taken in a predetermined amount was disposed in a neutron powder diffractometer and neutron powder diffractometry was carried out. From the resultant neutron powder diffraction pattern, the crystal structure was obtained by using a crystal structure interpretation program, Z-Rietveld, and the lattice constants, element positions, shares and atomic displacement parameters were calculated.

The determination system and conditions are as follows.
- Neutron powder diffractometer: High-energy accelerator research instrument J-PARC BL09 SPICA
- Neutron source: TOF (Time of Fly) type
- Sample amount: Approximately 0.6 g
- Measured d range: 0.3-3.7 Å [Evaluation results]

### (Crystalline phase)

The evaluation results of the crystalline phase (crystal structure) identified from the XRD pattern obtained by X-ray diffractometry (XRD) determination are shown in Table 1. In addition, the determined XRD patterns are shown in FIG. 4. As can be seen from Table 1 and FIG. 4, substantially no impurity phase (also referred to as 'unknown phase') is observed in the solid electrolyte obtained from each of Preparation Examples 1 and 2 and Comparative Preparation Examples 1 and 2, and most peaks are derived from an argyrodite phase. A sulfide-based solid electrolyte having an argyrodite-type crystal structure with little or no impurity phase is obtained. A sulfide-based solid electrolyte having a high degree of crystallization accelerates hopping conduction of lithium ions, and thus may contribute to improvement of ion conductivity.

### (Lattice volume)

With reference to the lattice constant derived from the XRD pattern, Preparation Examples 1 and 2 show a range of 9.8698-9.8700 Å, while the lattice volume is in a range of 961.4-961.5 Å³. Meanwhile, in Comparative Preparation Examples 1 and 2 wherein the lithium site of the sulfide-based solid electrolyte is not substituted with a Group 2 element (M), the lattice constant is 9.9467-9.9470 Å, and the lattice volume is 984.1-984.2 Å³. It is shown that substitution with the lithium site of the argyrodite-type crystal structure with a Group 2 element (M) causes a decrease in lattice volume of about 2.3%. Although it is not bound to any specific theory, it is thought that since one of two lithium sites is substituted with a Group 2 element (M) and the other becomes lithium vacancy, the crystal volume of the sulfide-based solid electrolyte may be changed. It is also thought that the lithium vacancy becomes a path for hopping conduction of lithium ions, and thus contributes to improvement of ion conductivity. In addition, it is thought that the Group 2 element (M) substituting for the lithium site may be divalent and may undergo a change in force of drawing anions around the Group 2 element (M) site, as compared to monovalent lithium ions. Therefore, it is thought that the sulfide-based solid electrolyte undergoes a change in crystal volume, and thus is converted into a structure suitable for hopping conduction of lithium ions.

With reference to the half width of the crystal peak of (311) surface of the argyrodite crystal structure, Preparation Examples 1 and 2 show a half width of 0.06°. Meanwhile, Comparative Preparation Examples 1 and 2 show a half width of 0.08°. Preparation Examples 1 and 2 which are solid electrolytes containing a divalent cation show a smaller half width. It is thought that such a small half width corresponds to a large crystallite size and contributes to improvement of ion conductivity. In addition, it can be seen that the crystallinity and crystal size of the solid electrolyte are not changed by a micronization process.

**[Table 1]**

| Sample | Firing temperature, time | Designed composition Li_{5.5-2y}M_{y}PS_{4.4}Cl_{1.0}Br_{0.6} | | Crystalline phase | | Lattice constant a = b = c (Å) | Lattice volume (Å³) | Half width (°) | Ion conductivity (σ 298K) (mS/cm) |
|---|---|---|---|---|---|---|---|---|---|
| | (°C), (h) | M | y | Argyrodite | Impurity | | | | |
| Prep. Ex. 1 | 430, 8 h | Ca | 0.025 | O | - | 9.8700 | 961.5 | 0.06 | 13.24 |
| Prep. Ex. 2 | 430, 8 h | Ca | 0.025 | O | - | 9.8698 | 961.4 | 0.06 | 4.32 |
| Prep. Ex. 3 | 430, 8 h | Ca | 0.025 | O | - | 9.8702 | 961.6 | 0.06 | 13.20 |
| Comp. Prep. Ex. 1 | 430, 8 h | - | - | O | - | 9.9470 | 984.2 | 0.08 | 9.91 |
| Comp. Prep. Ex. 2 | 430, 8 h | - | - | O | - | 9.9467 | 984.1 | 0.08 | 3.3 |

### (Particle size distribution)

The results of particle size determination are shown in the following Table 2. With reference to average particle diameter, D₅₀, the solid electrolyte crude powder containing a divalent cation according to Preparation Example 1 shows 15.1 µm, the solid electrolyte micropowder containing a divalent cation according to Preparation Example 2 shows 1.66 µm, and the solid electrolyte ultramicro-powder containing a divalent cation according to Preparation Example 3 shows 14.5 µm. In addition, the solid electrolyte crude powder containing no divalent cation according to Comparative Preparation Example 1 shows 14.7 µm, and the solid electrolyte micropowder containing no divalent cation according to Comparative Preparation Example 2 shows 1.42 µm. It is shown that solid electrolyte crude powder can be micronized into solid electrolyte micropowder by additional wet pulverization.

**[Table 2]**

| Sample | D10 (µm) | D50 (µm) | D90 (µm) |
|---|---|---|---|
| Prep. Ex 1 | 4.82 | 15.1 | 57.8 |
| Prep. Ex. 2 | 0.69 | 1.66 | 5.05 |
| Prep. Ex. 3 | 3.7 | 14.5 | 339 |
| Comp. Prep. Ex. 1 | 4.03 | 14.7 | 55.7 |
| Comp. Prep. Ex. 2 | 0.73 | 1.42 | 4.86 |

### (Ion conductivity)

The results of ion conductivity determination are shown in Table 1. The solid electrolyte crude powder containing a divalent cation according to Preparation Example 1 shows 13.24 mS/cm, the solid electrolyte micropowder containing a divalent cation according to Preparation Example 2 shows 4.32 mS/cm, and the solid electrolyte ultramicro-powder containing a divalent cation according to Preparation Example 3 shows 13.20 mS/cm. In addition, the solid electrolyte crude powder containing no divalent cation according to Comparative Preparation Example 1 shows 9.91 mS/cm, and the solid electrolyte micropowder containing no divalent cation according to Comparative Preparation Example 2 shows 3.3 mS/cm. Regardless of the presence of a divalent cation, solid electrolyte crude powder shows higher ion conductivity as compared to solid electrolyte micropowder. It is thought that when using solid electrolyte crude powder, it has a small grain boundary per unit volume, and thus shows higher ion conductivity. Regardless of the average particle diameter of a solid electrolyte, a solid electrolyte containing a divalent cation shows higher ion conductivity as compared to a solid electrolyte containing no divalent cation.

### (Neutron powder diffractometry)

The results of neutron powder diffractometry are shown in the following Table 3 and Table 4. Table 3 shows the results of crystal structure interpretation of the solid electrolyte crude powder according to Preparation Example 1. Table 4 shows the results of crystal structure interpretation of the solid electrolyte crude powder according to Comparative Preparation Example 1. In each table, a site is represented by a combination of number and English marking, wherein the number represents the number of positions where an element can be positioned in a crystal structure, and the English marking refers to the symmetricity of the corresponding site defined in the crystallography, assigned in the order of a, b, c, d ... from the highest symmetricity. In addition, g means the share of each site. Additionally, x, y and z are parameters determined by a site and are values showing a position of an element as a ratio of lattice constants in x, y and z directions. Further, Bᵢₛₒ refers to an atomic displacement parameter and represents a distribution of displacement of an atom caused by thermal vibration.

As shown in Table 3, it is determined that calcium (Ca) exists in a 48h site of the argyrodite type crystal structure in the solid electrolyte crude powder according to Preparation Example 1. The share, g, of calcium (Ca) at the 48h site is 0.003 ± 0.002. After calculating the doping amount of the Group 2 element (M) in the solid electrolyte crude powder having a crystal structure according to Preparation Example 1, it is 0.036 ± 0.024, and thus the introduction amount (y = 0.025) falls within the range. Since the solid electrolyte crude powder according to Comparative Preparation Example 1 uses no calcium as a source, no calcium (Ca) appears in the results of Table 4.

**[Table 3]**

| Results of crystal structure interpretation of solid electrolyte crude powder of Preparation Example 1 | | | | | | |
|---|---|---|---|---|---|---|
| Atom | Site | *g* | *x* | *y* | *z* | *B*ᵢₛₒ / Å² |
| Li1 | 48*h* | 0.444(6) | 0.3142 (4) | = 1-*x*(Li1) | 0.0174(6) | 5.7(2) |
| Ca1 | 48*h* | 0.003(2) | = *x*(Li1) | =*y*(Li1) | = (Li1) | = *B*ᵢₛₒ(Li1) |
| Br1 | 4*a* | 0.389(18) | 0 | 0 | 0 | 2.29(7) |
| Cl1 | 4*a* | 0.443(18) | 0 | 0 | 0 | = *B*ᵢₛₒ(Br1) |
| S1 | 4*a* | = 1-*g*(Br1)-g(Cl1) | 0 | 0 | 0 | = *B*ᵢₛₒ(Br1) |
| P1 | 4*b* | 1 | 0 | 0 | 0.5 | 2.01(7) |
| Br2 | 4*d* | 0.169(12) | 0.25 | 0.25 | 0.75 | 2.72(4) |
| Cl2 | 4*d* | 0.671(12) | 0.25 | 0.25 | 0.75 | = *B*ᵢₛₒ(Br2) |
| S2 | 4*d* | = 1-*g*(Br2)-*g*(Cl2) | 0.25 | 0.25 | 0.75 | = *B*ᵢₛₒ(Br2) |
| S3 | 16*e* | 1 | 0.11801(15) | = -x(S3) | = 0.5+*x*(S3) | 3.47(7) |
| Cubic *F*43m (216); a = 9.865424 (15) Å, Neutron Powder diffraction data at 300 K; S = 0.95, *R*_{wp} = 3.92%, *R*ₑ *=* 4.13%, *R*_{F} = 17.6% | | | | | | |

**[Table 4]**

| Results of crystal structure interpretation of solid electrolyte crude powder of Comparative Preparation Example 1 | | | | | | |
|---|---|---|---|---|---|---|
| **Atom** | **Site** | ***g*** | ***x*** | ***y*** | ***z*** | ***B*ᵢₛₒ / Å₂** |
| **Li1** | **48*h*** | **0.430(5)** | **0.31317 (16)** | **= 1-*x*(Li1)** | **0.0175(2)** | **5.50(9)** |
| **Br1** | **4*a*** | **0.376(3)** | **0** | **0** | **0** | **2.30(3)** |
| **Cl1** | **4*a*** | **0.439(3)** | **0** | **0** | **0** | **= *B*ᵢₛₒ(Br1)** |
| **S1** | **4*a*** | **= 1-*g*(Br1)-*g*(Cl1)** | **0** | **0** | **0** | **=*B*ᵢₛₒ(Br1)** |
| **P1** | **4*b*** | **1** | **0** | **0** | **0.5** | **2.11(3)** |
| **Br2** | **4*d*** | **0.2064(19)** | **0.25** | **0.25** | **0.75** | **2.720(15)** |
| **Cl2** | **4*d*** | **0.6156(19)** | **0.25** | **0.25** | **0.75** | **= *B*ᵢₛₒ(Br2)** |
| **S2** | ***4d*** | **= 1-*g*(Br2)-g(Cl2)** | **0.25** | **0.25** | **0.75** | **= *B*ᵢₛₒ(Br2)** |
| **S3** | **16*e*** | **1** | **0.11849(6)** | **= -*x*(S3)** | **= 0.5+*x*(S3)** | **3.44(3)** |
| **Cubic *F*43m (216); a = 9.868944 (6) Å, Neutron Powder diffraction data at 300 K; S = 1.97, *R*_{wp} = 3.33%, *Rₑ* = 1 .70%, *R*_{F} = 8.29%** | | | | | | |

### Example 1

First, 90 mg of the solid electrolyte crude powder containing a divalent cation according to Preparation Example 1 was weighed, installed in a molding jig and subjected to press molding under 110 Mpa for 1 minute to obtain solid electrolyte pellets.

Next, an NCM (nickel cobalt manganese)-based positive electrode active material having a Ni content of 80 mol%, the solid electrolyte micropowder containing a divalent cation, obtained from Preparation Example 2, and a conductive material were weighed at a weight ratio of 60:35:5. The materials were mixed to obtain a positive electrode mixture.

Then, 17 mg of the positive electrode mixture was placed on one surface of the solid electrolyte pellets and pressed by using the press pin made of SUS in the molding jig to perform planarization, and press molding was carried out under 110 MPa for 1 minute to obtain a positive electrode active material layer formed on the solid electrolyte layer. A SUS plate as a positive electrode current collector was provided on the positive electrode active material layer, and another SUS plate as a negative electrode current collector was provided in such a manner that it might be in direct contact with the solid electrolyte layer opposite to the positive electrode active material layer. The resultant structure was subjected to press molding under 554 MPa for 1 minute to obtain a laminate. The resultant laminate was combined with a press pin made of SUS to obtain a MACOR pipe cell. The resultant MACOR pipe cell was installed in a battery cell, and a low confining pressure of approximately 0.005 MPa was applied thereto to obtain an all-solid-state battery. In other words, the all-solid-state battery according to Example 1 includes solid electrolyte crude powder containing a divalent cation in the solid electrolyte layer 2, and includes solid electrolyte micropowder containing a divalent cation in the positive electrode active material layer.

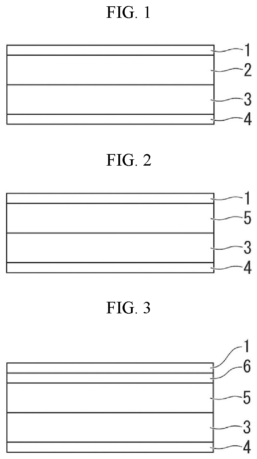

FIG. 1 illustrates an all-solid-state battery according to Example 1. As shown in FIG. 1, a negative electrode current collector 1 is in direct contact with a solid electrolyte layer 2 including a solid electrolyte containing a divalent cation. The all-solid-state battery according to Example 1 is in a battery precursor state before the initial charge and includes no negative electrode active material layer. The all-solid-state battery according to Example 1 is an all-solid-state battery having an anode-free structure.

### Example 2

An all-solid-state battery was obtained in the same manner as Example 1, except that the solid electrolyte micropowder containing a divalent cation, obtained from Preparation Example 2, was used instead of the solid electrolyte crude powder containing a divalent cation, obtained from Preparation Example 1, in the step of preparing solid electrolyte pellets. In other words, the all-solid-state battery according to Example 2 includes solid electrolyte micropowder containing a divalent cation in the solid electrolyte layer 2 and in the positive electrode active material layer 3.

### Example 3

An all-solid-state battery was obtained in the same manner as Example 1, except that a confining pressure of approximately 8 MPa was applied, instead of a confining pressure of approximately 0.005 MPa, in the step of manufacturing an all-solid-state battery.

### Example 4

An all-solid-state battery was obtained in the same manner as Example 1, except that the solid electrolyte ultracrude powder containing a divalent cation, obtained from Preparation Example 3, was used instead of the solid electrolyte crude powder containing a divalent cation, obtained from Preparation Example 1, in the step of preparing solid electrolyte pellets. In other words, the all-solid-state battery according to Example 2 includes solid electrolyte ultracrude powder containing a divalent cation in the solid electrolyte layer 2 and includes solid electrolyte micropowder containing a divalent cation in the positive electrode active material layer 3.

### Comparative Example 1

An all-solid-state battery was obtained in the same manner as Example 1, except that the solid electrolyte crude powder containing no divalent cation, obtained from Comparative Preparation Example 1, was used instead of the solid electrolyte crude powder containing a divalent cation, obtained from Preparation Example 1, in the step of preparing solid electrolyte pellets, and that the solid electrolyte micropowder containing no divalent cation, obtained from Comparative Preparation Example 2, was used instead of the solid electrolyte micropowder containing a divalent cation, obtained from Preparation Example 2, in the step of preparing a positive electrode mixture. In other words, as shown in FIG. 2, the all-solid-state battery according to Comparative Example 1 includes solid electrolyte crude powder containing no divalent cation in the solid electrolyte layer 5 and includes solid electrolyte micropowder containing no divalent cation in the positive electrode active material layer 3.

### Comparative example 2

An all-solid-state battery was obtained in the same manner as Comparative Example 1, except that an Ag-C intermediate layer was provided on the solid electrolyte layer opposite to the positive electrode active material layer and a confining pressure of approximately 4 MPa was applied, in the step of manufacturing an all-solid-state battery. The Ag-C intermediate layer was prepared by dissolving a predetermined amount of Ag and C (carbon black) in N-methyl pyrrolidone containing 7 wt% of PVDF added thereto, and applying the resultant solution to an SUS plate. In other words, as shown in FIG. 3, the all-solid-state battery according to Comparative Example 2 includes solid electrolyte crude powder containing no divalent cation in the solid electrolyte layer 5, includes solid electrolyte micropowder containing no divalent cation in the positive electrode active material layer 3, and an intermediate layer 6 is provided between the solid electrolyte layer 5 and the negative electrode current collector 1.

### [Evaluation of all-solid-state batteries]

### (Charge/discharge test)

The resultant all-solid-state batteries were used to perform a charge/discharge test at 25°C. The voltage range was set at 4.25-3.0 V, the charge condition was set at constant current (CC) (0.05 C)-constant voltage (CV) (0.01 C cutoff), and the discharge condition was set at CC (0.05 C). The charge capacity and discharge capacity of each battery were obtained from the charge/discharge curve. In addition, the discharge capacity retention (%) at 25°C with the charge condition of CC (0.05 C)-CV (0.01 C) and the discharge condition of CC (0.05 C) was calculated according to the following formula:

### (Discharge capacity at each cycle / discharge capacity at first cycle) X 100

### [Evaluation results]

### (Characteristics of all-solid-state batteries)

The relative ratio of the capacity of the all-solid-state battery of Example 1 based on the capacity of the all-solid-state battery of Comparative Example 1 was 103%, as expressed by a relative ratio of the initial discharge capacity.

The relative ratio of the capacity of the all-solid-state battery of Example 2 based on the capacity of the all-solid-state battery of Comparative Example 1 was 103%, as expressed by a relative ratio of the initial discharge capacity.

The relative ratio of the capacity of the all-solid-state battery of Example 3 based on the capacity of the all-solid-state battery of Comparative Example 1 was 101%, as expressed by a relative ratio of the initial discharge capacity.

It can be seen from the above results that the all-solid-state batteries according to Examples 1 to 3, wherein the solid electrolyte layer includes a sulfide-based solid electrolyte containing a Group 2 element and having an argyrodite type crystal structure, provide a higher discharge capacity as compared to the all-solid-state battery according to Comparative Example 1, including no sulfide-based solid electrolyte according to the present disclosure.

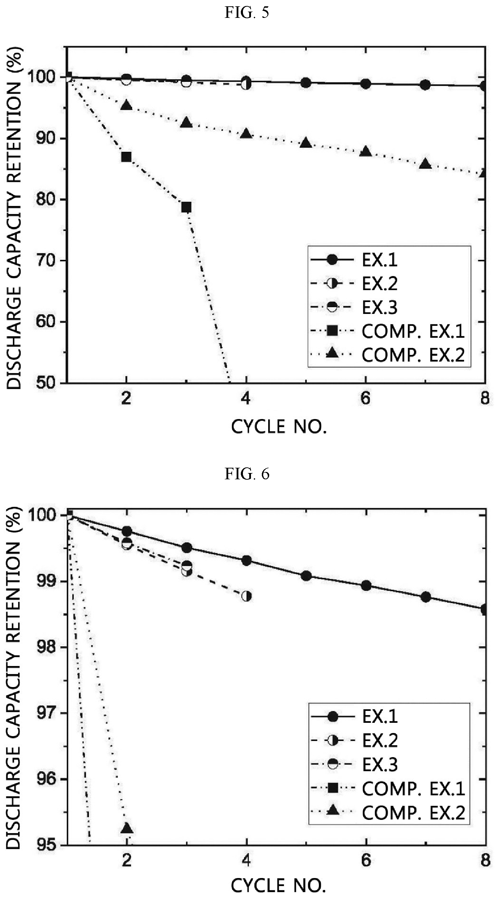

FIG. 5 and FIG. 6 are graphs illustrating the discharge capacity retention of the all-solid-state battery according to each of Examples 1 to 4 and Comparative examples 1 and 2. FIG. 5 and FIG. 6 are different from each other in terms of vertical axis scale.

With reference to the discharge capacity retention at the 3^{rd} cycle, Example 1 shows 99.5%, Example 2 shows 99.2%, Example 3 shows 99.2%, Example 4 shows 97.9%, Comparative Example 1 shows 78.8%, and Comparative Example 2 shows 92.4%.

With reference to the discharge capacity retention at the 8^{th} cycle, Example 1 shows 98.6%, Example 4 shows 65.5%, and Comparative Example 2 shows 84.2%. In Example 4, the discharge capacity decreases after the 4^{th} cycle. Although the solid electrolyte ultracrude powder used in the solid electrolyte layer of Example 4 has the same level of average particle diameter as the solid electrolyte crude powder used in Example 1, it has a broader particle diameter distribution. It is thought that such a broader particle size distribution results in non-uniform lithium-ion conduction during charge/discharge, for example, due to degradation of the smoothness of the solid electrolyte layer surface, thereby causing a drop in discharge capacity. In Comparative Example 1, the discharge capacity rapidly decreases after the 4^{th} cycle and thus the discharge capacity cannot be determined. In Comparative Example 2, the intermediate layer 6 is provided between the solid electrolyte layer 5 and negative electrode current collector, unlike Comparative example 1. It is thought that since the intermediate layer 6 inhibits growth of lithium dendrite, Comparative Example 2 shows better cycle characteristics as compared to Comparative example 1.

It can be from the above results that the all-solid-state batteries according to Examples 1 to 3, wherein the solid electrolyte layer includes a sulfide-based solid electrolyte containing a Group 2 element and having an argyrodite type crystal structure, provide higher cycle characteristics as compared to the all-solid-state batteries according to Comparative Examples 1 and 2, including no sulfide-based solid electrolyte according to the present disclosure. The all-solid-state battery according to Example 4 shows higher cycle characteristics at a small cycle number, as compared to the all-solid-state batteries according to Comparative Examples 1 and 2.

Each of the all-solid-state batteries according to Examples 1 and 3 includes solid electrolyte crude powder containing a divalent cation (i.e. the solid electrolyte crude powder according to Preparation Example 1) in the solid electrolyte layer, the all-solid-state battery according to Example 2 includes solid electrolyte micropowder containing a divalent cation (i.e. the solid electrolyte micropowder according to Preparation Example 2) in the solid electrolyte layer, and the all-solid-state battery according to Example 4 includes solid electrolyte ultracrude powder containing a divalent cation (i.e. the solid electrolyte ultracrude powder according to Preparation Example 3) in the solid electrolyte layer. As shown in Table 1, the solid electrolyte crude powder of Preparation Example 1 and the solid electrolyte ultracrude powder of Preparation example 3 show an ion conductivity approximately 3 times higher than that of the solid electrolyte micropowder of Preparation Example 2. As shown in FIG. 6, the all-solid-state battery of Example 1 shows higher cycle characteristics as compared to the all-solid-state battery of Example 2. It is thought that such higher cycle characteristics of the all-solid-state battery of Example 1 results from high ion conductivity of the solid electrolyte crude powder containing a divalent cation. Even though the all-solid-state battery of Example 4 contains solid electrolyte ultracrude powder having high ion conductivity, it shows lower cycle characteristics as compared to the all-solid-state battery of Example 2. It is thought that large particles, such as agglomerates, contained in the solid electrolyte ultracrude powder of Example 4 having a broad particle diameter distribution causes degradation of the smoothness of the solid electrolyte layer surface, thereby making lithium-ion conduction during charge/discharge non-uniform. In general, during charge/discharge of an all-solid-state battery, a high confining pressure is applied to inhibit growth of lithium dendrite on a negative electrode current collector. However, as can be seen from FIG. 6, the all-solid-state battery of Example 1 in which a confining pressure of approximately 0.005 MPa is applied shows higher discharge capacity and higher cycle characteristics as compared to the all-solid-state battery of Example 3 in which a confining pressure of approximately 8 Mpa is applied. It is thought that this is because the solid electrolyte containing a divalent cation is used in the solid electrolyte layer and the positive electrode active material layer. As a result, the all-solid-state battery can be driven under a low confining pressure.

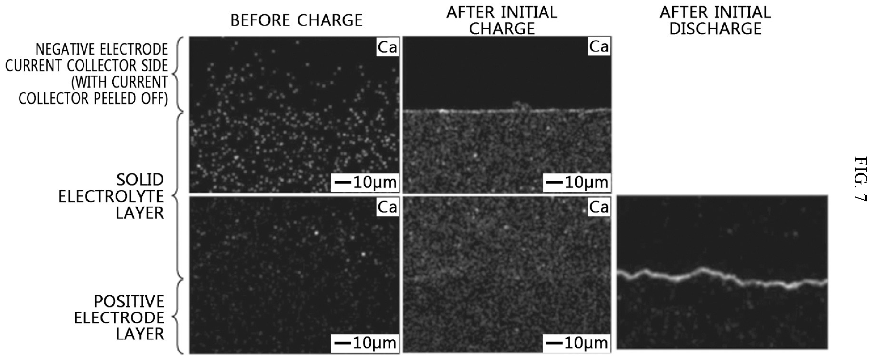

FIG. 7 is a scanning electron microscopic (SEM) image illustrating a distribution of calcium in the all-solid-state battery of Example 1. The left image of FIG. 7 shows a cross-sectional view of the all-solid-state battery before the initial charge thereof. The central image of FIG. 7 shows a cross-sectional view of the all-solid-state battery after the initial charge thereof. The right image of FIG. 7 shows a cross-sectional view of the all-solid-state battery after the initial discharge thereof. In each SEM image, calcium (Ca) is shown in a white color. To carry out SEM observation, the negative electrode current collector was peeled off.

As can be seen from the left image of FIG. 7, before the initial charge of the all-solid-state battery, calcium (Ca) contained in the solid electrolyte layer is distributed in the whole solid electrolyte layer. However, it is to be noted that white spots observed in a zone in a 'state with a current collector peeled off' are derived from calcium (Ca) in the internal side of the solid electrolyte layer, and no calcium (Ca) exists in the zone in a 'state with a current collector peeled off.'

As can be seen from the central image of FIG. 7, calcium (Ca) partially migrates to the interface between the negative electrode current collector and the solid electrolyte layer, after the initial charge of the all-solid-state battery. As can be seen from the right image of FIG. 7, calcium (Ca) partially migrates to the interface between the positive electrode active material layer (also referred to as 'positive electrode layer') and the solid electrolyte layer, after the initial discharge of the all-solid-state battery. After the 2^{nd} charge/discharge, calcium migrates to the interface between the negative electrode current collector and the solid electrolyte layer during charge, and migrates to the interface between the positive electrode active material layer and the solid electrolyte layer during discharge. This suggests that calcium (Ca) as a divalent cation migrates between both electrodes together with lithium as an electric charge carrier, in the all-solid-state battery having an anode-free structure according to Example 1.

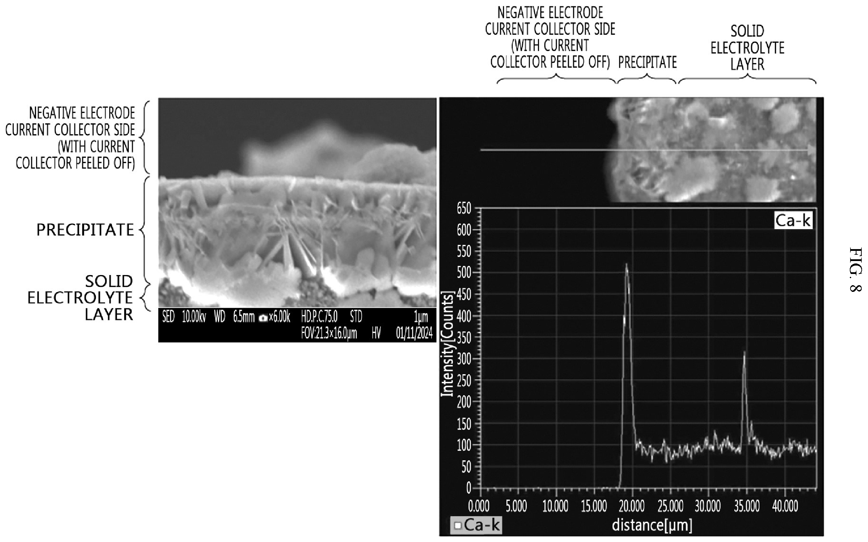

FIG. 8 is an SEM image (left) of the negative electrode current collector side after the initial charge and a graph (right) illustrating calcium line scanning results, for an all-solid-state battery according to Example 1. To carry out SEM observation, the negative electrode current collector was peeled off.

As can be seen from the left image of FIG. 8, precipitate is formed between the negative electrode current collector and the solid electrolyte layer, during the initial charge of the all-solid-state battery. The calcium line scanning (SEM-EDX analysis) results through the solid electrolyte layer-precipitate- negative electrode current collector are shown in the right image of FIG. 8. It can be seen that calcium (Ca) is distributed throughout the solid electrolyte layer and the precipitate. Particularly, calcium (Ca) exists abundantly at the interface between the precipitate and the negative electrode current collector. It is thought that since the precipitate is formed between the solid electrolyte layer and the negative electrode current collector, close adhesive property between the negative electrode current collector and the solid electrolyte layer is improved by way of the precipitate.

It thought that since lithium is formed between the negative electrode current collector and the solid electrolyte layer during charge of the anode-free all-solid-state battery, the precipitate appearing in FIG. 8 contains lithium. In addition, it is thought from the SEM-EDX analysis that the precipitate appearing in FIG. 8 contains calcium (Ca) single substance or an alloy or compound of calcium (Ca) with lithium. Particularly, it is thought from calcium (Ca) present at the negative electrode current collector side in the precipitate that calcium (Ca) contained in the precipitate improves close adhesion property/adhesiveness between the negative electrode current collector and the solid electrolyte layer by way of the precipitate. As a result, it is thought that the all-solid-state battery is provided with excellent discharge capacity and cycle characteristics, and operability at a low confining pressure. More analysis is needed, but it is thought that the precipitate formed between the positive electrode active material layer and the solid electrolyte layer during discharge of the all-solid-state battery has the same shape and characteristics as the above-mentioned precipitate formed between the negative electrode current collector and the solid electrolyte layer.

In the anode-free batteries according to the related art, an ion conduction path and/or electric conduction path between a negative electrode current collector and a solid electrolyte layer is broken by lithium-containing precipitate, such as lithium metal, formed between the negative electrode current collector and the solid electrolyte layer after charge, thereby causing degradation of ion conductivity and cycle characteristics. However, in the all-solid-state battery according to an embodiment of the present disclosure, the Group 2 element contained in the solid electrolyte layer is deposited between the negative electrode current collector and the solid electrolyte layer during charge and improves close adhesive property therebetween, and thus it is possible to maintain high discharge capacity and cycle characteristics. In addition, in the all-solid-state battery according to an embodiment of the present disclosure, the Group 2 element contained in the solid electrolyte layer is deposited between the positive electrode current collector and the solid electrolyte layer during discharge and improves close adhesive property therebetween, and thus it is possible to maintain high discharge capacity and cycle characteristics. Further, in the all-solid-state battery according to an embodiment of the present disclosure, close adhesive property between the solid electrolyte layer and the electrode is improved by the deposit containing the Group 2 element, and thus the all-solid-state battery can be driven under a low confining pressure, for example, of approximately 0.005 MPa.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. An all-solid-state battery which comprises a positive electrode comprising a positive electrode active material, a negative electrode current collector, and a solid electrolyte layer disposed between the positive electrode and the negative electrode current collector,
the all-solid-state battery comprising no negative electrode active material,
wherein lithium ions are supplied from the positive electrode active material layer through charging, so that a lithium metal layer as a negative electrode active material is formed on the negative electrode current collector, and
the solid electrolyte layer comprises a sulfide-based solid electrolyte containing a Group 2 element and having an argyrodite-type crystal structure.

2. The all-solid-state battery according to claim 1, the negative electrode current collector and the solid electrolyte layer are in direct contact with each other.

3. The all-solid-state battery according to claim 1,
wherein the sulfide-based solid electrolyte is represented by the chemical formula of Li_{7-x-2y}M_{y}PS₆₋ₓHaₓ, and in the chemical formula,
M represents at least one element selected from Group 2 elements,
Ha is at least one element selected from halogen elements, and
x and y satisfy 0 < x < 2.5 and 0 < y < 0.45.

4. The all-solid-state battery according to claim 3, wherein M is Ca.

5. The all-solid-state battery according to claim 1, which comprises no reaction product of the negative electrode current collector with the sulfide-based solid electrolyte.

6. The all-solid-state battery according to claim 1, which is pressurized under a pressure of 0.3 MPa or less in a direction along which the positive electrode, the negative electrode current collector and the solid electrolyte layer are stacked.

7. The all-solid-state battery according to claim 1, wherein the positive electrode active material layer comprises the sulfide-based solid electrolyte.

8. The all-solid-state battery according to claim 1, wherein the sulfide-based solid electrolyte contained in the solid electrolyte layer has an average particle diameter larger than the average particle diameter of the sulfide-based solid electrolyte contained in the positive electrode active material layer.

9. The all-solid-state battery according to claim 1, wherein the Group 2 element exists at a 48h site of the argyrodite-type crystal structure.
